**Europäisches Patentamt**

**European Patent Office**

**Office européen des brevets**

(11) Veröffentlichungsnummer: **0 107 808**
**B1**

(12) **EUROPÄISCHE PATENTSCHRIFT**

(45) Veröffentlichungstag der Patentschrift:
**01.06.88**

(21) Anmeldenummer: **83109803.3**

(22) Anmeldetag: **30.09.83**

(51) Int. Cl.⁴: **B 05 C 11/10,** F 16 K 31/524,
**B 05 C 5/02**

(54) **Vorrichtung zur dosierbaren Ausgabe von Dickstoffen.**

(30) Priorität: **04.10.82 DE 3236647**

(43) Veröffentlichungstag der Anmeldung:
**09.05.84 Patentblatt 84/19**

(45) Bekanntmachung des Hinweises auf die Patenterteilung:
**01.06.88 Patentblatt 88/22**

(84) Benannte Vertragsstaaten:
**AT BE CH FR GB IT LI LU NL SE**

(56) Entgegenhaltungen:
**EP - A - 0 040 068**
**DE - A - 1 945 949**
**US - A - 4 084 539**

(73) Patentinhaber: **Intec Bielenberg GmbH & Co. KG,**
**Heisenbergstrasse, D-5014 Kerpen/Türnich (DE)**

(72) Erfinder: **Lehmann, Manfred, Ing., Pfaffenpfädchen 19,**
**D-5000 Köln-Porz-Eil (DE)**

(74) Vertreter: **Köhne, Friedrich, Dipl.-Ing.,**
**Postfach 250265 Lothringer Strasse 81,**
**D-5000 Köln 1 (DE)**

ACTORUM AG

**Beschreibung**

Die Erfindung bezieht sich auf eine Vorrichtung zur dosierbaren Ausgabe von Dickstoffen, insbesondere Dicht- und Klebemitteln, wobei ein von den Dickstoffen beaufschlagtes Auslassventil mit einem düsenartigen Ventilsitz vorgesehen ist, mit welchem ein relativ zu dem Ventilsitz verstellbarer Ventilstössel zusammenwirkt, und wobei zur Relativverstellung von Ventilstössel und Ventilsitz eine der gewünschten Dosierung entsprechend bewegbare Nockenvorrichtung vorhanden ist.

Eine Vorrichtung dieser Gattung, nämlich zum Leimauftragen, ist aus der DE-A-1 945 949 bekannt. Bei dieser Vorrichtung sind ein oder zwei Düsen mit in axialer Richtung verschiebbaren Nadeln vorgesehen, wobei die Nadeln mit einem Joch verbunden sind. Mit Hilfe eines drehbaren Nockens kann das Joch und damit die Nadeln für einen bestimmten Zeitraum angehoben und damit die Düsen geöffnet werden. Der drehbare Nocken dreht sich jeweils nach Auslösung durch eine Fotozelle oder durch ein elektrisches Auge einmal um 360°. Bei dieser Vorrichtung gibt es nur zwei Endstellungen für die Nadel, nämlich eine Schliessstellung und eine Öffnungsstellung. Mit andern Worten ist jede Düse entweder vollständig geöffnet. Der Nocken kann bei der bekannten Vorrichtung verschiedene Formen haben, so dass der Zeitraum für die Freilegung der Düsenöffnung infolge Anhebens der betreffenden Nadel beliebig variiert werden kann. Durch Wahl der Form des Nockens und gegebenenfalls durch Austausch des Nockens gegen einen anderen kann also der Zeitraum, währenddessen die Düse vollständig geöffnet ist, geändert werden. Da die Düsen, wie erläutert, nur vollständig geöffnet oder vollständig geschlossen sein können, ist die bekannte Vorrichtung zum Punktleimen oder zum Auftragen eines Leimfilms geeignet und vorgesehen.

Auf vielen Gebieten der Technik, insbesondere bei der automatisierten Fertigung, ist es erforderlich, Dickstoffe, insbesondere Dicht- und Klebemittel, auf irgendwelchen Industrieprodukten aufzubringen. Beispielsweise ist es bei der automatisierten Fertigung von Kraftfahrzeugen erforderlich, entlang gewisser Kanten, Falze oder Nähte von Karosserieteilen Dicht- oder Klebstoffäden bzw. dünne Streifen aufzubringen. Dieses Aufbringen kann sowohl von Hand als auch von programmgesteuerten Handhabungsautomaten erfolgen. In der Praxis sind diese Auftragungsvorgänge mit erheblichen Schwierigkeiten verbunden, weil einmal eine schnelle Fertigung gewünscht wird, zum anderen aber eine genügende und möglichst gleichmässige Auftragung des Mittels verlangt wird. Handhabungsautomaten werden dabei meist so gesteuert, dass sie an geradlinigen Auftragungsstücken sehr schnell, dagegen an Kurven oder in Ecken verhältnismässig langsam fahren. Bei den bisherigen Auftragungsvorrichtungen ergab sich eine unregelmässige Auftragung, nämlich eine zu geringe Menge an den geradlinigen Strecken oder eine zu grosse Menge an den Kurvenstücken oder Ecken.

Der Erfindung liegt demgemäss die Aufgabe zugrunde, eine Vorrichtung zu schaffen, die eine schnelle Änderung der Düsenaustrittsöffnung, der Materialausflussgeschwindigkeit und der Menge der aufzutragenden Dickstoffe in Anpassung an den jeweiligen Bedarf an Dickstoffen gestattet.

Die gestellte Aufgabe wird erfindungsgemäss dadurch gelöst, dass die Nockenvorrichtung eine mittels einer Schwenkachse bewegbare Nockenscheibe aufweist, an welcher eine drehbar gelagerte Kurvenrolle anliegt, die über ein Gestänge mit dem Ventilstössel verbunden ist, dass an dem Gestänge zwischen Ventilstössel und Kurvenrolle ein einseitig wirkender Kolben in einem Zylinder verschiebbar angebracht ist, und dass der Kolben derart mit Druckluft beaufschlagt ist, dass die Kurvenrolle stets an der Nockenscheibe anliegt.

Auf diese Weise wird erreicht, dass die Ausflussgeschwindigkeit und die Menge der aufzutragenden Dickstoffe sehr schnell an die Gegebenheiten angepasst werden können, und zwar sowohl bei einer gewünschten gleichmässigen oder einer plötzlichen geschwindigkeits- oder zeit- oder wegabhängigen Änderung der Dosierung der ausgegebenen Dickstoffmenge.

Vorteilhafte Ausgestaltungen der Erfindung ergeben sich aus den Unteransprüchen.

In der Zeichnung ist ein Ausführungsbeispiel der Erfindung im Schema dargestellt, und zwar zeigen

Figur 1 eine Ansicht eines Auslassventils, welches an einen Proportionaldosierer angeschlossen ist,

Figur 2 einen Vertikalschnitt durch das Auslassventil mit Seitenansicht auf den angeschlossenen Schwenkantrieb und den Positionierer,

Figur 3 eine Ansicht auf das Auslassventil gemäss Figur 1, jedoch teils im Vertikalschnitt und

Figur 4 einen Vertikalschnitt durch den Proportionaldosierer.

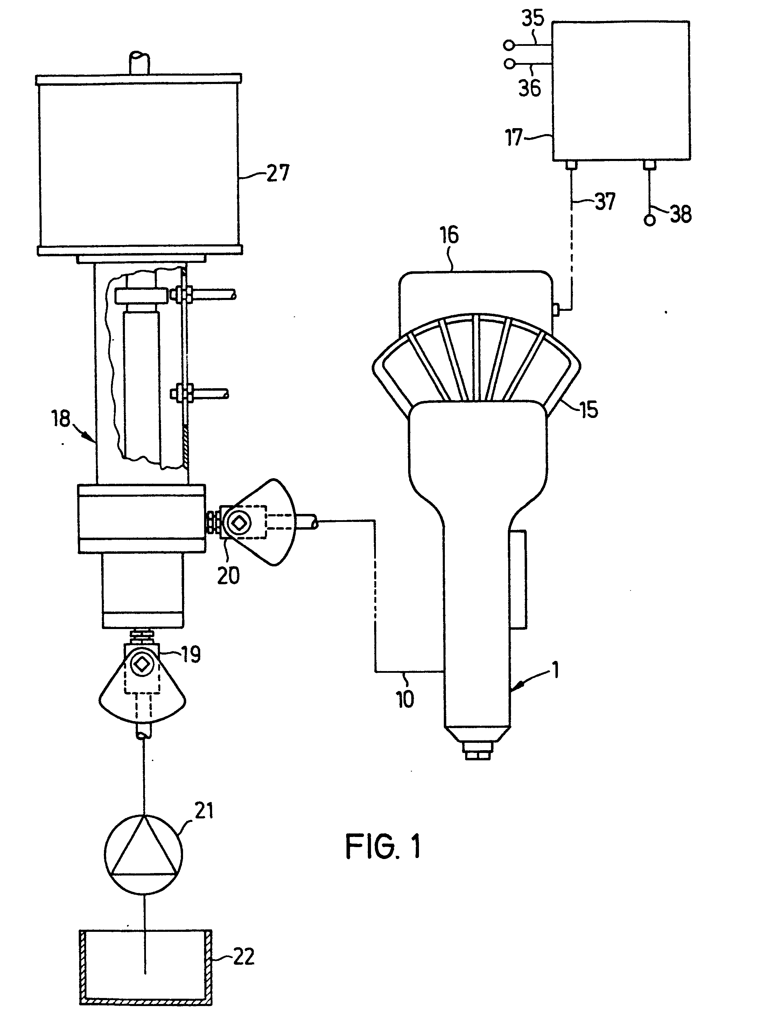

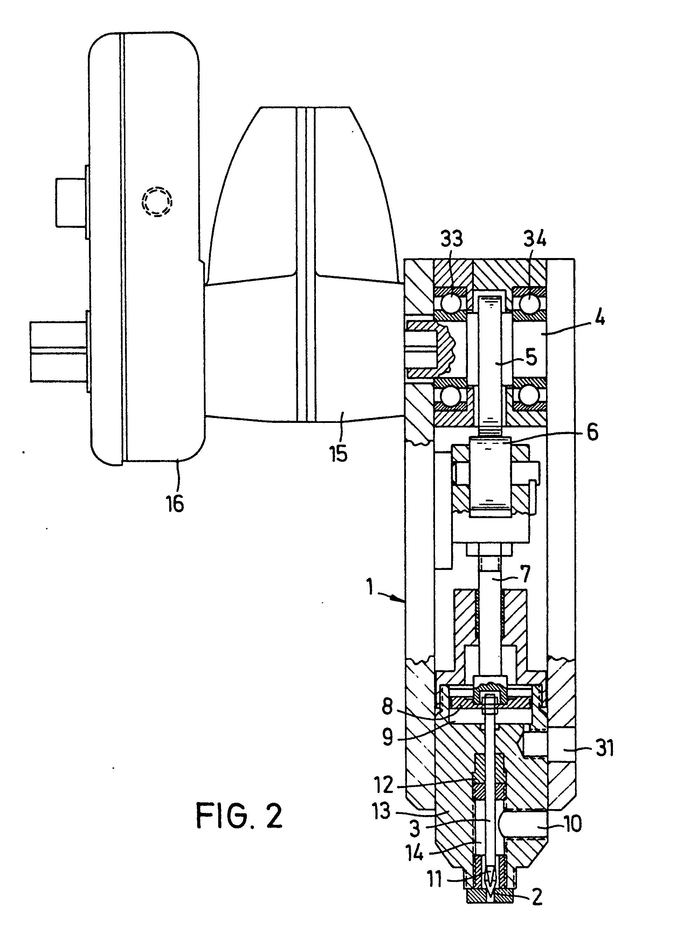

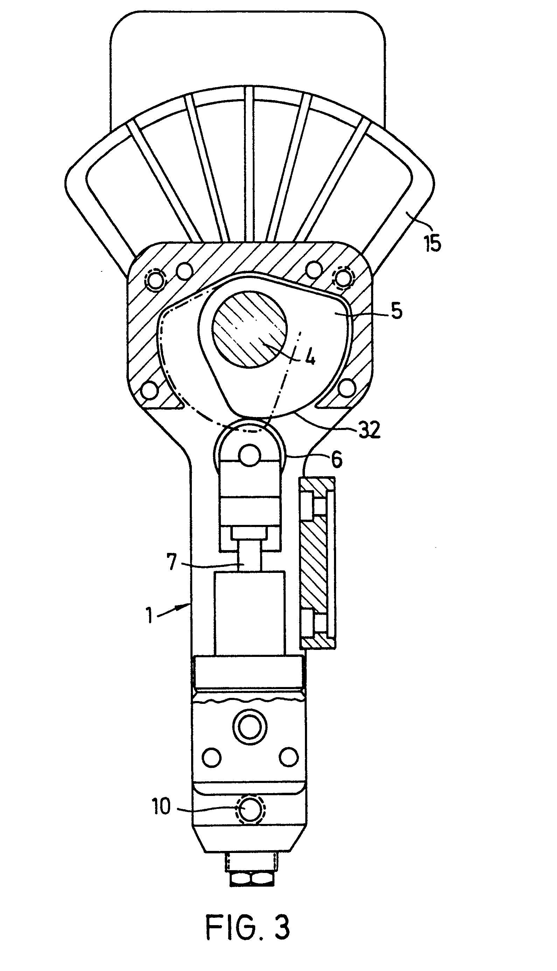

Figur 1 veranschaulicht ein Ausführungsbeispiel einer Gesamtvorrichtung zur dosierbaren Ausgabe von Dickstoffen, insbesondere Dicht- und Klebemitteln. Das Auslassventil 1 ist in den Figuren 2 und 3 in vergrössertem Massstab verdeutlicht. Das Auslassventil 1 weist am unteren Ende einen düsenartigen Ventilsitz 2 auf, mit welchem ein verstellbarer Ventilstössel zusammenwirkt. Wenn es in der Praxis darum geht, möglichst feinfühlig dosierte verhältnismässig dünne Dickstoffäden auszugeben, ist der Ventilstössel 3 vorteilhafterweise als Ventilnadel ausgebildet. Die Ventilnadel besitzt an ihrem einen, unteren, Ende einen Schliesskegel 11, welcher an den Ventilsitz 2 angepasst ist. Die Ventilnadel ist mit Abstand von dem Schliesskegel 11 mittels einer feststehenden Dichtung 12 in dem Ventilkopf 13 geführt. Das andere, obere, Ende der Ventilnadel ist mit einem einseitig wirkenden Kolben 8 verbunden, der in einem Zylinder 9 verschiebbar angebracht ist. Über einen Anschluss 31 für die Zuleitung von Druckluft wird der Kolben 8 mit Druckluft beaufschlagt und somit nach oben hin gedrückt. Im Bereich zwischen der Dichtung 12 und dem Ventilsitz 2 ist die Ventilnadel von einem Aufnahmeraum 14 für den aufzutragenden Dickstoff umgeben. An diesen Aufnahmeraum 14 ist eine Zuleitung 10 angeschlossen.

Zur Relativverstellung von Ventilstössel 3 bzw. Ventilnadel und Ventilsitz 2 ist eine der gewünschten Dosierung entsprechend bewegbare Nockenvorrichtung vorhanden. Wie insbesondere in den Figuren 2 und 3 ersichtlich, weist die Nockenvorrichtung eine Nockenscheibe 5 auf, die mittels einer Schwenkachse 4 in der Ebene der Figur 3 bewegbar ist. An dieser Nockenscheibe 5 liegt eine drehbar gelagerte Kurvenrolle 6 an, die über ein Gestänge 7 mit dem Ventilstössel 3 bzw. der Ventilnadel verbunden ist. An dem Gestänge 7 zwischen Ventilstössel 3 und Kurvenrolle 6 ist der vorbeschriebene einseitig wirkende Kolben 8 in einem Zylinder 9 angebracht. Durch die Beaufschlagung des Kolbens 8 auf der Unterseite mit Druckluft wird erreicht, dass die Kurvenrolle 6 stets an der Nockenscheibe 5 anliegt. Die Schwenkachse 4 ist zweckmässigerweise mittels Kugellagern 33 und 34 im Gehäuse des Auslassventils 1 gehalten. An ihr greift ein mechanischer Schwenkantrieb 15 an, der seinerseits mit einem druckluftbetätigten Positionierer 16 verbunden ist. An den Positionierer 16 ist ein elektrisch-pneumatischer Messumformer 17 angeschlossen.

Vorteilhafterweise besitzt die Nockenscheibe 5 einen Schwenkbereich von etwa 120°, wodurch eine sehr feinfühlige und genaue, aber auch schnelle Verstellung der Ventilnadel 3 erreicht wird. Dabei ist die Anlagefläche 32 der Nockenscheibe 5, an der die Kurvenrolle 6 anliegt, derart gestaltet, dass sich der Schliesskegel 11 der Ventilnadel 3 bei der einen Endstellung der Nockenscheibe 5 in Schliessstellung und bei der anderen Endstellung der Nockenscheibe 5 in Öffnungsstellung befindet. Im Bereich zwischen diesen beiden Endstellungen ist eine gleichmässige Veränderung des Düsenquerschnitts möglich.

Wenn das beschriebene Auslassventil 1 mittels eines Handhabungsautomaten mit konstanter oder veränderlicher Geschwindigkeit geführt wird, so werden entsprechend der jeweiligen Geschwindigkeit und/oder entsprechend der jeweils gewünschten Auslassmenge der Dickstoffe elektrische Eingangsimpulse über die elektrischen Zuleitungen 35 und 36 in den Messumformer 17 eingegeben. Zweckmässigerweise beträgt die Stromstärke dieser elektrischen Eingangsimpulse 4 mA bis 20 mA. Der Messumformer ist so ausgebildet, dass er entsprechend der Stromstärke der Eingangsimpulse einen Luftdruck erzeugt, der vorteilhafterweise zwischen 0,2 bar bis 1 bar liegt. Die Druckluft gelangt über die Luftleitung 37 zu dem Positionierer 16, der so eingerichtet ist, dass er entsprechend der Höhe des Luftdrucks den mechanischen Schwenkantrieb 15 in Bewegung setzt, der seinerseits für eine entsprechende Schwenkbewegung der Nockenscheibe 5 und damit Einstellung der Ventilnadel 3 sorgt. Über den Anschluss 38 wird der Messumformer mit Druckluft von etwa 1,4 bar versorgt.

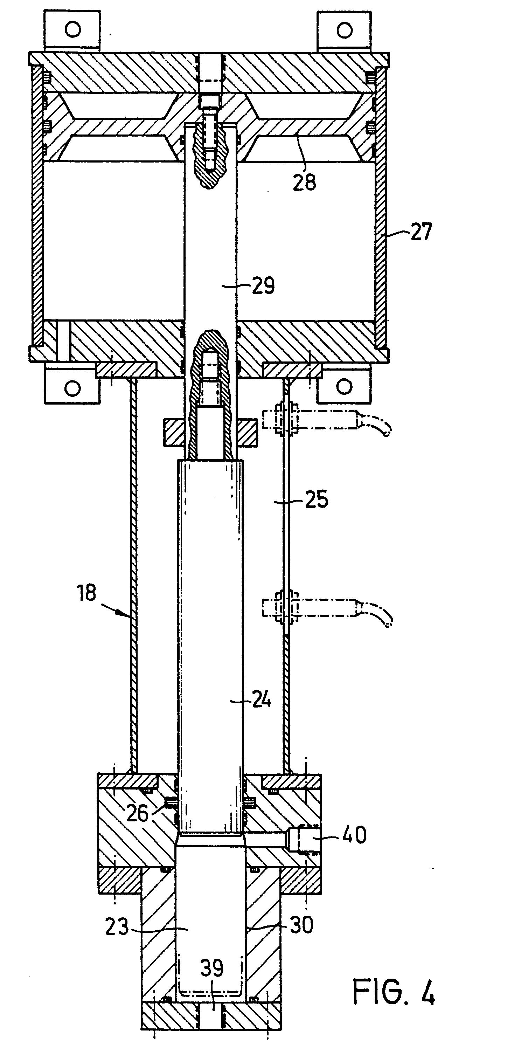

Wie die Figuren 1 und 4 veranschaulichen, ist zur Beaufschlagung des Auslassventils mit Dickstoffen ein pneumatisch oder elektrisch angetriebener Proportionaldosierer 18 angeschlossen, und zwar über die Zuleitung 10. Der Proportionaldosierer 18 weist einen pneumatisch betätigten Eingangskugelhahn 19 und einen ebenfalls pneumatisch betätigten Ausgangskugelhahn 20 auf. Der Eingangskugelhahn 19 ist mit einer pneumatischen Kolbenpumpe 21 und diese mit einem Vorratsbehälter 22 für die Dickstoffe verbunden. Der Proportionaldosierer 18 besitzt eine Dosierkammer 23, in welche ein in seiner Längsrichtung verschiebbarer Verdrängerkolben 24 eintaucht. Der Durchmesser der Dosierkammer 23 ist also grösser als der Durchmesser des Verdrängerkolbens 24. Oberhalb der Dosierkammer ist eine Spülkammer 25 angeordnet. Zwischen der Dosierkammer 23 und der Spülkammer 25 ist in entsprechenden Gehäusebauteilen eine den Verdrängerkolben 24 umgebende feststehende Dichtung 26 vorgesehen. Die Spülkammer 25 ist ständig bis zu einem solchen Niveau mit Spülmittel gefüllt, dass der Verdrängerkolben 24 auch im oberen in Figur 4 dargestellten Totpunkt des Verschiebeweges unterhalb des Spülmittelspiegels steht. Damit wird erreicht, dass der Verdrängerkolben nicht mit der Umluft in Berührung kommt, somit nicht verkrustet, was besonders für lufthärtende Materialien bzw. Dickstoffe wichtig ist, und es wird die feststehende Dichtung 26, die auch aus mehreren Dichtungsteilen bestehen kann, geschont. Vorteilhafterweise ist die Innenwandung 30 der Dosierkammer 23 elektropoliert und die Oberfläche des Verdrängerkolbens 24 hartverchromt. Auf diese Weise werden Anbackungen und Verkrustungen an den betreffenden Wänden bzw. Flächen verhindert.

Oberhalb der Spülkammer 25 ist zum pneumatischen Antrieb des Verdrängerkolbens 24 ein pneumatischer Zylinder 27 mit Kolben 28 vorgesehen. Über eine Verbindungsstange 29 ist der Verdrängerkolben 24 mit diesem Kolben 28 fest verbunden.

Zur Voll- und Leerüberwachung der Dosierkammer können an geeigneten Stellen des Proportionaldosierers 18 mechanisch betätigte oder berührungslos wirkende, nicht gezeichnete Endschalter vorgesehen sein, die eine Anzeige ermöglichen, in welcher Stellung sich der Verdrängerkolben befindet bzw. ob die Dosierkammer 23 gefüllt oder geleert ist.

Die Wirkungsweise der oben erläuterten Vorrichtung ist im wesentlichen folgende. Durch die Kolbenpumpe 21 werden die später aufzutragenden Dickstoffe aus einem Vorratsbehälter über den Eingangskugelhahn 19 durch die Anschlussöffnung 39 in die Dosierkammer 23 des Proportionaldosierers 18 eingeführt. Wenn die Dosierkammer 23 in oberster Stellung des Verdrängerkolbens 24 mit Material gefüllt ist, kann der Eingangskugelhahn selbsttätig und/oder pneumatisch geschlossen werden. Wenn nun der Verdrängerkolben 24 mittels des pneumatischen Antriebs nach unten gedrückt wird und in die Dosierkammer eintaucht, wird das Material bei Bedarf mit gleichem vorgewählten Druck verdrängt und tritt an der Öffnung 40 aus und gelangt über den Ausgangskugelhahn 20 in Öffnungsstellung und über eine möglichst flexible Leitung und Zuleitung 10 zu dem Auslassventil 1. Aufgrund des konstanten Materialdrucks bzw. des den Dickstoffen aufgegebenen Druckes und der beschriebenen Möglichkeit, schnell die Lage des Schaltnockens bzw. der Nockenscheibe 5 und somit den Düsenquerschnitt zu ändern, ist es möglich, nicht nur langsame, sondern auch schnelle, abrupte Fördermengenänderungen durchzuführen.

**Patentansprüche**

1. Vorrichtung zur dosierbaren Ausgabe von Dickstoffen, insbesondere Dicht- und Klebemitteln, wobei ein von den Dickstoffen beaufschlagtes Auslassventil (1) mit einem düsenartigen Ventilsitz (2) vorgesehen ist, mit welchem ein relativ zu dem Ventilsitz verstellbarer Ventilstössel (3) zusammenwirkt, und wobei zur Relativverstellung von Ventilstössel (3) und Ventilsitz (2) eine der gewünschten Dosierung entsprechend bewegbare Nockenvorrichtung (5) vorhanden ist, dadurch gekennzeichnet, dass die Nockenvorrichtung eine mittels einer Schwenkachse (4) bewegbare Nokkenscheibe (5) aufweist, an welcher eine drehbar gelagerte Kurvenrolle (6) anliegt, die über ein Gestänge (7) mit dem Ventilstössel (3) verbunden ist, dass an dem Gestänge (7) zwischen Ventilstössel (3) und Kurvenrolle (6) ein einseitig wirkender Kolben (8) in einem Zylinder (9) verschiebbar angebracht ist, und dass der Kolben (8) derart mit Druckluft beaufschlagt ist, dass die Kurvenrolle (6) stets an der Nockenscheibe (5) anliegt.

2. Vorrichtung nach Anspruch 1, dadurch gekennzeichnet, dass der Ventilstössel (3) als Ventilnadel ausgebildet ist, welche an einem Ende einen an den Ventilsitz (2) angepassten Schliesskegel (11) aufweist, dass die Ventilnadel mit Abstand von dem Schliesskegel (11) mittels einer feststehenden Dichtung (12) in einem Ventilkopf (13) geführt ist, dass das andere Ende der Ventilnadel mit der von Druckluft beaufschlagten Seite des Kolbens (8) verbunden ist, und dass die Ventilnadel im Bereich zwischen der Dichtung (12) und dem Ventilsitz (2) von einem Aufnahmeraum (14) für Dickstoff umgeben ist, der mit einer Zuleitung (10) versehen ist.

3. Vorrichtung nach Anspruch 1 oder 2, dadurch gekennzeichnet, dass an der Schwenkachse (4) ein mechanischer Schwenkantrieb (15) angreift, dass der Schwenkantrieb (15) mit einem druckluftbetätigten Positionierer (16) verbunden ist und dass an den Positionierer (16) ein elektrisch-pneumatischer Messumformer (17) angeschlossen ist.

4. Vorrichtung nach einem der Ansprüche 1 bis 3, dadurch gekennzeichnet, dass die Nockenscheibe (5) einen Schwenkbereich von etwa 120° besitzt und die Anlagefläche (32) der Nockenscheibe (5) für die Kurvenrolle (6) derart gestaltet ist, dass sich der Schliesskegel (11) der Ventilnadel (3) bei der einen Endstellung der Nockenscheibe (5) in Schliessstellung und bei der anderen Endstellung der Nockenscheibe (5) in Öffnungsstellung befindet und dass im Bereich zwischen den Endstellungen eine gleichmässige Veränderung des Düsenquerschnitts erfolgt.

5. Vorrichtung nach Anspruch 3 oder 4, dadurch gekennzeichnet, dass die umzuformenden elektrischen Eingangsimpulse am Messformer (17) eine Stromstärke von 4 mA bis 20 mA aufweisen, dass der daraus resultierende Luftdruck zur Betätigung des Positionierers 0,2 bar bis 1 bar beträgt, und dass der Messumformer (17) mit Druckluft von etwa 1,4 bar versorgt ist.

6. Vorrichtung nach einem der Ansprüche 1 bis 5, dadurch gekennzeichnet, dass zur Beaufschlagung des Auslassventils (1) mit Dickstoffen ein pneumatisch oder elektrisch angetriebener Proportionaldosierer (18) angeschlossen ist.

7. Vorrichtung nach Anspruch 6, dadurch gekennzeichnet, dass der Proportionaldosierer (18) einen pneumatisch betätigten Eingangskugelhahn (19) und Ausgangskugelhahn (20) aufweist.

8. Vorrichtung nach Anspruch 7, dadurch gekennzeichnet, dass der Eingangskugelhahn (19) mit einer pneumatischen Kolbenpumpe (21) und diese mit einem Vorratsbehälter (22) für Dickstoffe verbunden ist.

9. Vorrichtung nach einem der Ansprüche 6 bis 8, dadurch gekennzeichnet, dass der Proportionaldosierer (18) eine Dosierkammer (23) aufweist, in welche ein in seiner Längsrichtung verschiebbarer Verdrängerkolben (24) eintaucht, dass oberhalb der Dosierkammer eine Spülkammer (25) angeordnet ist, dass zwischen Dosierkammer (23) und Spülkammer (25) eine den Verdrängerkolben (24) umgebende feststehende Dichtung (26) vorgesehen ist, und dass die Spülkammer (25) ständig bis zu einem Niveau mit Spülmittel gefüllt ist, dass der Verdrängerkolben (24) auch im oberen Totpunkt des Verschiebewegs unterhalb des Spülmittelspiegels steht.

10. Vorrichtung nach Anspruch 9, dadurch gekennzeichnet, dass oberhalb der Spülkammer (25) ein pneumatischer Zylinder (27) mit Kolben (28) vorgesehen ist, und dass der Verdrängerkolben (24) mit diesem Kolben (28) fest verbunden ist.

11. Vorrichtung nach einem der Ansprüche 6 bis 10, dadurch gekennzeichnet, dass zur Voll- und Leerüberwachung mechanisch betätigte oder berührungslos wirkende Endschalter vorgesehen sind.

12. Vorrichtung nach einem der Ansprüche 9 bis 11, dadurch gekennzeichnet, dass die Innenwandung (30) der Dosierkammer (23) elektropoliert ist, und dass die Oberfläche des Verdrängerkolbens (24) hart verchromt ist.

**Claims**

1. A device for dispensing thick materials in dosed quantities, particularly sealants and adhesives, whereby a discharge valve (1) supplied with the thick materials is provided with a nozzle-like valve seal (2), a valve spindle (3) adjustable relative to the valve seat cooperating with the latter, and whereby a cam device (5) movable according to the desired dose is provided for the relative displacement of the valve spindle (3) and the valve seat (2), characterised in that the cam device has a cam plate (5) movable by means of a swivelling axle (4), adjacent to which cam plate there is a rotatable cam roller (6), which is connected by a linkage (7) to the valve spindle (3), that there is attached to the linkage (7), between valve spindle (3) and cam roller (6), a unidirectional piston (8) movable in a cylinder (9), and that the piston (8) is placed under pressure with compressed air, such that the cam roller (6) always lies adjacent to the cam plate (5).

2. A device according to claim 1, characterised in that the valve spindle (3) is designed as a valve needle, on one end of which there is a closure plug (11) adapted to the valve seat (2), that the valve needle is guided by means of a rigid packing (12) in a valve head (13) at a distance from the closure plug (11), that the other end of the valve needle is connected to the side of the piston (8) acted on by compressed air, and that the valve needle in the area between the packing (12) and the valve seat (2) is surrounded by an admission space (14) for thick material which is supplied by a feed line (10).

3. A device according to claim 1 or 2, characterised in that a mechanical part-turn actuator (15) engages with the swivelling axle (4), that the part-turn actuator (15) is connected to a compressed-air operated positioning element (16) and that an electric-pneumatic measuring transducer is connected to the positioning element (16).

4. A device according to any one of claims 1 to 3, characterised in that the cam plate (5) has a swivelling range of approximately 120° and the contact surface (32) of the cam plate (5) for the cam roller (6) is designed in such a way that the closure plug (11) of the valve needle (3) at the extreme position of the cam plate (5) is in the closed position and at the other extreme position of the cam plate (5) is in the open position and that there is a uniform change in the nozzle cross section in the range between the extreme positions.

5. A device according to claim 3 or 4, characterised in that the electrical input pulse to be transformed in the measuring transducer (17) has a current intensity of 4 mA to 20 mA, that the air pressure resulting therefrom for actuating the positioning element is 0,2 bar to 1 bar, and that the measuring transducer (17) is supplied with compressed air at approximately 1,4 bar.

6. A device according to any one of claims 1 to 5, characterised in that a pneumatically or electrically operated proportional dosing device (18) is connected for the purpose of supplying the discharge valve (1) with thick materials.

7. A device according to claim 6, characterised in that the proportional dosing device (18) has pneumatically actuated inlet and outlet ball valves (19) and (20) respectively.

8. A device according to claim 7, characterised in that inlet ball valve (19) is connected to a pneumatic piston pump (21) and the latter is connected to a reservoir (22) for the thick material.

9. A device according to any one of claims 6 to 8, characterised in that the proportional dosing element (18) has dosing chamber (23), into which a displacement piston (24) movable in its longitudinal direction submerges, that a rinsing chamber (25) is arranged above the dosing chamber, that between the dosing chamber (23) and rinsing chamber (25) there is provided a rigid gasket (26) surrounding the displacement piston (24), and that the rinsing chamber (25) is permanently filled with rinsing agent up to a level which is such that the displacement piston (24) remains beneath the surface of the rinsing agent even in the top dead centre of the displacement path.

10. A device according to claim 9, characterised in that a pneumatic cylinder (27) with piston (28) is provided above the rinsing chamber (25), and that the displacement piston (24) is rigidly attached to this piston (28).

11. A device according to any one of claims 6 to 10, characterised in that mechanically actuated or non-contact operated limit switches are provided for monitoring full and empty.

12. A device according to any one of claims 9 to 11, characterised in that the inner wall (30) of the dosing chamber (23) is electrolytically polished, and that the surface of the displacement piston (24) is hard-chrome plated.

**Revendications**

1. Dispositif pour fournir des matériaux épais en quantités dosées, en particulier des matériaux d'étanchéité et des adhésifs, dans lequel une soupape de sortie (1) chargée en matériaux épais est pourvue d'un siège de soupape (2) du genre buse, avec lequel coopère un poussoir de soupape (3) réglable par rapport du siège de soupape, et dans lequel il est prévu un dispositif à came (5) déplaçable en fonction du dosage souhaité pour effectuer le réglage relatif entre le poussoir de soupape (3) et le siège de soupape (2), caractérisé en ce que le dispositif à came comporte un disque à came (5) déplaçable au moyen d'un axe de pivotement (4), contre lequel est appliqué un galet de came (6) monté rotatif, relié au poussoir de soupape (3) par une tringlerie (7), un piston (8) agissant d'un côté étant relié à la tringlerie (7) entre le poussoir de soupape (3) et le galet de came (6) de façon à coulisser dans un cylindre (9), le piston (8) étant sollicité par de l'air sous pression de façon telle que le galet de came (6) est constamment appliqué contre le disque à came (5).

2. Dispositif selon la revendication 1, caractérisé en ce que le poussoir de soupape (3) est constitué par une aiguille de soupape qui présente à une extrémité un cône de fermeture (11) adapté au siège de soupape (2), l'aiguille de soupape étant guidée dans une tête de soupape (13) en étant maintenue espacée du cône de fermeture (11) au moyen d'une garniture fixe (12), l'autre extrémité de l'aiguille de soupape étant reliée au côté du piston (8) sollicité par l'air sous pression, l'aiguille de soupape étant entourée, dans la région entre la garniture (12) et le siège de soupape (2), d'un espace (14) de réception du matériau épais, qui est pourvu d'une conduite d'alimentation (10).

3. Dispositif selon la revendication 1 ou la revendication 2, caractérisé en ce qu'un dispositif mécanique (15) d'entraînement en rotation est en prise avec l'axe de pivotement (4) et est relié à un indexeur (16) à air comprimé, un transducteur de mesure (17) électropneumatique étant relié audit indexeur.

4. Dispositif selon l'une quelconque des revendications 1 à 3, caractérisé en ce que le disque à came (5) possède une région de pivotement d'environ 120° et sa surface (32) de contact avec le galet de came (6) est agencée de façon que le cône de fermeture (11) de l'aiguille de soupape (3) se trouve en position de fermeture lorsque le disque à came est dans une première position extrême, et qu'il se trouve en position d'ouverture lorsque le disque à came est dans sa seconde position extrême, et de façon qu'une variation régulière de la section de la base se produise dans la région entre ces positions extrêmes.

5. Dispositif selon la revendication 3 ou la revendication 4, caractérisé en ce que les impulsions électriques à convertir, qui entrent dans le transducteur de mesure (17), présentent une intensité de 4 à 20 mA, la pression d'air qui en résulte pour l'actionnement de l'indexeur étant comprise entre 0,2 et 1 bar, et le transducteur (17) est alimenté avec de l'air comprimé sous environ 1,4 bar.

6. Dispositif selon l'une quelconque des revendications 1 à 5, caractérisé en ce qu'un doseur proportionnel (18) entraîné pneumatiquement ou électriquement est relié à la soupape de sortie (1) pour charger celle-ci en matériau épais.

7. Dispositif selon la revendication 6, caractérisé en ce que le doseur proportionnel comporte un robinet d'entrée (19) et un robinet de sortie (20) à boisseau sphérique, actionnés pneumatiquement.

8. Dispositif selon la revendication 7, caractérisé en ce que le robinet d'entrée (19) est relié à une pompe à piston pneumatique (21), et celle-ci est reliée à un réservoir de stockage (22) pour le matériau épais.

9. Dispositif selon l'une quelconque des revendications 6 à 8, caractérisé en ce que le doseur proportionnel (18) comporte une chambre de dosage (23) dans laquelle plonge un piston déplaceur (24) coulissant dans sa direction longitudinale, une chambre de rinçage (25) étant disposée au-dessus de la chambre de dosage, une garniture (26) fixe, entourant le piston déplaceur (24) étant prévue entre les chambres de dosage (23) et de rinçage (25), la chambre de rinçage (25) étant constamment remplie d'un moyen de rinçage jusqu'à un certain niveau, le piston déplaceur (24) étant situé sous la surface du moyen de rinçage même au point mort haut de son trajet de coulissement.

10. Dispositif selon la revendication 9, caractérisé en ce qu'un cylindre pneumatique (27) à piston (28) est prévu au-dessus de la chambre de rinçage (25), le piston déplaceur (24) étant lié rigidement à ce piston (28).

11. Dispositif selon l'une quelconque des revendications 6 à 10, caractérisé en ce que des interrupteurs de fin de course, actionnés mécaniquement ou fonctionnant sans contact, sont prévus pour le contrôle des états «plein» et «vide».

12. Dispositif selon l'une quelconque des revendications 9 à 11, caractérisé en ce que la paroi intérieure (30) de la chambre de dosage (23) est polie électriquement et la surface du piston déplaceur (24) est chromée dur.

FIG. 1

FIG. 2

FIG. 3

FIG. 4